# EUROPEAN PATENT APPLICATION

(11) **EP 4 451 772 A1**
(43) Date of publication of application: **23.10.2024**
(21) Application number: 23745818.7
(22) Date of filing: 04.01.2023
(51) Int. Cl.: H04W 72/04

(54) **DATA TRANSMISSION METHOD AND APPARATUS**

(30) Priority: 30.01.2022 CN 202210113438
(71) Applicant: Huawei Technologies Co., Ltd., Shenzhen, Guangdong 518129 (CN)
(72) Inventor: LIAO, Ting, Shenzhen, Guangdong 518129 (CN); ZHOU, Xiaoyun, Shenzhen, Guangdong 518129 (CN); ZONG, Zaifeng, Shenzhen, Guangdong 518129 (CN); ZHENG, Xiaochun, Shenzhen, Guangdong 518129 (CN)
(74) Representative: Pfenning, Meinig & Partner mbB
(86) International application number: PCT/CN2023/070542
(87) International publication number: WO 2023/142933

(57) **Abstract**

This application provides a data transmission method and apparatus, to resolve a problem that flexibility of a data packet transmission mode in a passive internet of things is poor. The method includes: A tag management function network element receives a first message, where the first message is used to request to perform an operation on information about an electronic tag. The tag management function network element obtains first information. The tag management function network element determines a transmission mode based on the first information, where the transmission mode is transmission via a user plane, and triggers establishment of a transmission channel between an access network device and a user plane function network element, where the transmission channel is used for transmission of a result of the operation on the information about the electronic tag. In the foregoing mode, the tag management function may flexibly select a transmission path, and may select the user plane for transmission, so that signaling overheads can be reduced.

## Description

### CROSS-REFERENCE TO RELATED APPLICATIONS

This application claims priority to Chinese Patent Application No. 202210113438.5, filed with the China National Intellectual Property Administration on January 30, 2022 and entitled "DATA TRANSMISSION METHOD AND APPARATUS", which is incorporated herein by reference in its entirety.

### TECHNICAL FIELD

This application relates to the field of communication technologies, and in particular, to a data transmission method and apparatus.

### BACKGROUND

In the development of communication, to reduce power consumption of a terminal device, a passive radio frequency identification (radio frequency identification, RFID) technology is introduced in a communication network to implement a passive internet of things. A working principle of the RFID technology is: A tag converts, into energy, a radio signal sent by a reader/writer, and works when driven by the energy. In the passive internet of things, a base station integrates a capability of a card reader. The base station may send the radio signal to the tag, for example, a passive or semi-passive terminal device. The terminal device may work when driven by the energy converted from the signal, for example, send a data packet to the base station.

In the passive internet of things, the data packet sent by the passive or semi-passive terminal device is basically a small data packet. As more passive internet of things terminals are deployed, more data packets are transmitted in the passive internet of things. However, currently, a transmission procedure of the passive internet of things includes only a control plane transmission procedure; consequently, flexibility is poor.

### SUMMARY

This application provides a data transmission method and apparatus, to resolve a problem that flexibility of a data packet transmission mode in a passive internet of things is poor.

According to a first aspect, an embodiment of this application provides a data transmission method. The method may be performed by a tag management function network element or a module (for example, a chip) in the tag management function network element. For example, the tag management function network element performs the method. The method includes: receiving a first message, where the first message is used to request to perform an operation on information about an electronic tag; obtaining first information; determining a transmission mode based on the first information, where the transmission mode is transmission via a user plane; and triggering establishment of a transmission channel between an access network device and a user plane function network element, where the transmission channel is used for transmission of a result of the operation on the information about the electronic tag.

According to the solution provided in this embodiment of this application, the tag management function may flexibly select a transmission path. Compared with a conventional technology in which a transmission mode of transmission via a control plane is fixedly used, in this embodiment of this application, data transmission flexibility can be improved. According to the solution provided in this embodiment of this application, the user plane may be selected for transmission, so that signaling overheads can be reduced.

In a possible design, the transmission mode is specifically: transmission through a tunnel between the access network device and the user plane function network element, transmission through an interface between the access network device and the user plane function network element, or forwarding by using an internet protocol address of the user plane function network element. In the foregoing mode, transmission via the user plane may be implemented, so that signaling overheads can be reduced.

In a possible design, second information carries address information of an application function network element. In the foregoing design, the address information of the application function network element may implicitly indicate transmission via the user plane. According to this manner, signaling overheads can be reduced.

In a possible design, the first information is from the application function network element, or the first information is from local information of the tag management function network element.

In a possible design, the first information may be from configuration information of the tag management function network element, or the first information may be from information obtained by the tag management function network element from another device.

In a possible design, the first information is from the application function network element, and before the determining a transmission mode based on the first information, the method further includes: sending third information to the application function network element, where the third information includes information about at least one transmission mode. In the foregoing design, the at least one transmission mode is exposed to the application function network element, so that a transmission mode selected by the application function network element does not exceed a capability of the tag management function network element.

In a possible design, the first information indicates the transmission mode expected by the application function network element.

In a possible design, the first information may indicate a specific path of a transmission path expected by the AF network element; the first information may indicate a type of a transmission path expected by the AF network element; the first information may indicate a network element that a transmission path expected by the AF network element passes through; or the first information indicates a parameter such as an expected load.

In a possible design, the first information includes information about at least one of the following devices: the access network device, an access and mobility management function network element, a session management function, or the user plane function network element, and information about a first device in the at least one device indicates a capability and/or a load of the first device. According to the foregoing design, a transmission mode as appropriate as possible may be selected, so that transmission efficiency can be improved.

In a possible design, the first information indicates an application scenario. According to the foregoing design, a transmission mode as appropriate as possible may be selected, so that transmission efficiency can be improved.

In a possible design, the first information is configuration information of the tag management function, and the configuration information is used to determine the transmission mode.

In a possible design, the operation includes at least one of the following: a read operation, a write operation, an inventory operation, a kill operation, a lock operation, a block write operation, a block erase operation, an access operation, an encryption operation, or a decryption operation.

In a possible design, the triggering establishment of a transmission channel between an access network device and a user plane function network element includes: sending the second information to the first device, where the second information is used to trigger the establishment of the transmission channel between the access network device and the user plane function network element, and the first device is the access network device, the access and mobility management function network element, or the user plane function network element.

According to a second aspect, an embodiment of this application provides a data transmission method. The method may be performed by a first device or a module (for example, a chip) in the first device. For example, the first device performs the method. The method includes: receiving second information from a tag management function network element, where the second information is used to trigger an access and mobility management function network element to establish a transmission channel between an access network device and a user plane function network element, the transmission channel is used to transmit a result of an operation performed on information about an electronic tag, and the second information carries an address of an application function network element; and establishing the transmission channel between the access network device and the user plane function network element.

Compared with a conventional technology in which a transmission mode of transmission via a control plane is fixedly used, in the solution provided in this embodiment of this application, a user plane may be selected for transmission, so that signaling overheads can be reduced.

In a possible design, the transmission channel between the access network device and the user plane function network element is transmission through a tunnel, transmission through an interface, or forwarding by using an internet protocol address. In the foregoing mode, transmission via a user plane may be implemented, so that signaling overheads can be reduced.

In a possible design, if the transmission channel between the access network device and the user plane function network element is transmission through the interface, the establishing the transmission channel between the access network device and the user plane function network element includes: sending fourth information to the access network device, where the fourth information is used to trigger invoking the interface from the access network device to the user plane function network element.

In a possible design, the first device is the access network device, the access and mobility management function network element, or the user plane function network element.

According to a third aspect, an embodiment of this application provides a data transmission method. The method may be performed by an access network device or a module (for example, a chip) in the access network device. For example, the access network device performs the method. The method includes: receiving a second message, where the second message indicates to perform a first operation on information about a first-type electronic tag in a first area; determining at least one electronic tag based on the second message; performing the first operation on the at least one electronic tag; and sending an execution result of the first operation to a user plane function network element.

Compared with a conventional technology in which a transmission mode of transmission via a control plane is fixedly used, in the solution provided in this embodiment of this application, a user plane may be selected for transmission, so that signaling overheads can be reduced.

In a possible design, the sending an execution result of the first operation to a user plane function network element includes: sending the execution result of the first operation to the user plane function network element through a tunnel between the access network device and the user plane function network element; sending the execution result of the first operation to the user plane function network element based on an interface between the access network device and the user plane function network element; or forwarding the execution result of the first operation to the user plane function network element based on an internet protocol IP address of the user plane function network element.

In a possible design, the first operation includes at least one of the following: a read operation, a write operation, an inventory operation, a kill operation, a lock operation, a block write operation, a block erase operation, an access operation, an encryption operation, or a decryption operation.

In a possible design, the method further includes: obtaining an address of an application function network element.

According to a fourth aspect, an embodiment of this application provides a data transmission method. The method may be performed by a user plane function network element or a module (for example, a chip) in the user plane function network element. For example, the user plane function network element performs the method. The method includes: receiving fifth information from an access network device, where the fifth information is a result of a first operation performed by the access network device on information about at least one electronic tag; obtaining an address of an application function network element; and sending the fifth information to the application function network element.

Compared with a conventional technology in which a transmission mode of transmission via a control plane is fixedly used, in the solution provided in this embodiment of this application, a user plane may be selected for transmission, so that signaling overheads can be reduced.

In a possible design, the receiving fifth information from an access network device includes: receiving the fifth information through a tunnel between the access network device and the user plane function network element; or receiving the fifth information based on an interface between the access network device and the user plane function network element.

In a possible design, the obtaining an address of an application function network element includes: obtaining the address of the application function network element from the access network device, an access and mobility management function network element, or a session management function network element.

In a possible design, the first operation includes at least one of the following: a read operation, a write operation, an inventory operation, a kill operation, a lock operation, a block write operation, a block erase operation, an access operation, an encryption operation, or a decryption operation.

According to a fifth aspect, an embodiment of this application provides a communication apparatus. The apparatus includes modules/units for performing the method according to any one of the first aspect and the possible implementations of the first aspect. The modules/units may be implemented by hardware, or may be implemented by hardware executing corresponding software.

For example, the communication apparatus may include a transceiver module and a processing module. The transceiver module may be configured to perform information receiving and sending processing in each design solution according to the first aspect, for example, receive a first message. The processing module is configured to determine a transmission mode based on first information, and the like.

According to a sixth aspect, an embodiment of this application provides a communication apparatus. The apparatus includes modules/units for performing the method according to any one of the second aspect and the possible implementations of the second aspect. The modules/units may be implemented by hardware, or may be implemented by hardware executing corresponding software.

For example, the communication apparatus may include a transceiver module and a processing module. The transceiver module may be configured to perform information receiving and sending processing in each design solution according to the second aspect, for example, receive second information from a tag management function network element. The processing module is configured to establish a transmission channel between an access network device and a user plane function network element, and the like.

According to a seventh aspect, an embodiment of this application provides a communication apparatus. The apparatus includes modules/units for performing the method according to any one of the third aspect and the possible implementations of the third aspect. The modules/units may be implemented by hardware, or may be implemented by hardware executing corresponding software.

For example, the communication apparatus may include a transceiver module and a processing module. The transceiver module may be configured to perform information receiving and sending processing in each design solution according to the third aspect, for example, receive a second message from an access and mobility management function network element. The processing module is configured to determine at least one electronic tag based on the second message, and the like.

According to an eighth aspect, an embodiment of this application provides a communication apparatus. The apparatus includes modules/units for performing the method according to any one of the fourth aspect and the possible implementations of the fourth aspect. The modules/units may be implemented by hardware, or may be implemented by hardware executing corresponding software.

For example, the communication apparatus may include a transceiver module and a processing module. The transceiver module may be configured to perform information receiving and sending processing in each design solution according to the fourth aspect, for example, receive fifth information from an access network device. The processing module is configured to obtain an address of an application function network element, and the like.

According to a ninth aspect, an embodiment of this application provides a communication apparatus, including: a processor, and a memory and a communication interface that are separately coupled to the processor. The communication interface is configured to communicate with another device, and the processor is configured to: run instructions or a program in the memory, and perform the method according to any one of the first aspect, the second aspect, the third aspect, the fourth aspect, and the possible implementations through the communication interface.

According to a tenth aspect, an embodiment of this application provides a computer-readable storage medium. The computer-readable storage medium stores computer-readable instructions, and when the computer-readable instructions are run on a computer, the method according to any one of the first aspect, the second aspect, the third aspect, the fourth aspect, and the possible implementations of the first aspect, the second aspect, the third aspect, and the fourth aspect is performed.

According to an eleventh aspect, an embodiment of this application provides a computer program product including instructions. When the computer program product runs on a computer, the method according to any one of the first aspect, the second aspect, the third aspect, the fourth aspect, and the possible implementations of the first aspect, the second aspect, the third aspect, and the fourth aspect is performed.

According to a twelfth aspect, an embodiment of this application provides a communication system. The system includes a tag management function network element configured to perform any method according to the first aspect, an access and mobility management function network element configured to perform any method according to the second aspect, an access network device configured to perform any method according to the third aspect, and a user plane function network element configured to perform any method according to the fourth aspect.

For technical effects that may be brought by any possible design in any one of the fifth aspect to the twelfth aspect, refer to descriptions of technical effects that may be brought by any possible design in the first aspect to the fourth aspect. Details are not described herein again.

### BRIEF DESCRIPTION OF DRAWINGS

FIG. 1 is a diagram of an architecture of a communication network system according to an embodiment of this application;
FIG. 2 is a schematic flowchart of a data transmission method according to an embodiment of this application;
FIG. 3 is a diagram of a data transmission procedure according to an embodiment of this application;
FIG. 4 is a diagram of a data transmission procedure according to an embodiment of this application;
FIG. 5 is a diagram of a data transmission procedure according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

To make objectives, technical solutions and advantages of embodiments of this application clearer, the following further describes embodiments of this application in detail with reference to the accompanying drawings.

In the following descriptions, some terms in embodiments of this application are explained and described, to help a person skilled in the art have a better understanding.
(1) Inventory operation: The operation may be obtaining identification information of an electronic tag, for example, obtaining the identification information of the electronic tag by using a command such as a query (query) command or an acknowledgment (ack) command.
(2) Read (Read) operation: The read operation may be reading content stored in an electronic product code (electronic product code, EPC) memory bank, a tag identifier (tag identifier, TID) memory bank, a reserved memory bank, or a user memory bank in memory banks of the electronic tag, or the like.
(3) Write (Write) operation: The write operation may be performed on the EPC memory bank, the TID memory bank, the reserved memory bank, or the user memory bank in the memory bank of the electronic tag.
(4) Kill (Kill) operation: The kill operation may enable the electronic tag never to work.
(5) Lock (Lock) operation: The lock operation may be locking information about the electronic tag, and may avoid performing the read operation or the write operation on the electronic tag. Alternatively, the lock operation may be locking the memory bank (memory bank), and may avoid performing or allow to perform the read operation or the write operation on the memory bank.
(6) Block write operation: The block write operation may enable a reader/writer to perform a multi-word write operation on the reserved memory bank, the EPC memory, the TID memory bank, or the user memory bank in the memory banks of the tag by using a single command.
(7) Block erase operation: The block erase operation may enable the reader/writer to perform a multi-word erase operation on the reserved memory bank, the EPC memory bank, the TID memory bank, or the user memory bank in the memory banks of the tag.
(8) Access operation: The access operation enables a tag with a non-zero-value access password (access password) to change from an open (open) state to a secured (secured) state.

In embodiments of this application, "at least one" means one or more, and "a plurality of" means two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, but are not intended to limit sizes, content, a sequence, a time sequence, priorities, importance degrees, or the like of the plurality of objects. For example, a first message and a second message are merely intended to distinguish between different messages, but do not indicate that the two messages are different in content, priorities, or importance degrees.

The foregoing describes concepts of some names used in embodiments of this application. The following describes technical features of embodiments of this application.

In a passive internet of things, a base station integrates a capability of a card reader. The base station may send a radio signal to a tag, for example, a passive or semi-passive terminal device. The terminal device may work when driven by energy converted from the signal, for example, send a data packet to the base station. The data packet sent by the passive or semi-passive terminal device is basically a small data packet. As more passive internet of things terminals are deployed, more data packets are transmitted in the passive internet of things. Currently, a data packet transmission mode in the passive internet of things is based on an IP data packet transmission procedure in a CIoT. Specifically, the terminal device transmits data to an access and mobility management function (access and mobility management function, AMF) network element, and then the AMF network element transmits the data to a session management function (session management function, SMF) network element. The SMF network element may send the data to an application function (application function, AF) network element via a network exposure function (network exposure function, NEF) network element, or may send the data to a data network (data network, DN) via a user plane function (user plane function, UPF) network element. It can be learned that a transmission procedure is complex, and control plane signaling overheads are high.

Based on this, embodiments of this application provide a communication method and apparatus, to resolve problems of a complex data transmission procedure and high signaling overheads in a passive internet of things. The method and the apparatus are based on a same inventive concept. Because problem-resolving principles of the method and the apparatus are similar, mutual reference may be made to implementations of the apparatus and the method, and repeated parts are not described.

The communication method provided in this application may be applied to various communication systems, for example, an internet of things (internet of things, IoT), a narrow band internet of things (narrow band internet of things, NB-IoT), long term evolution (long term evolution, LTE), a 5^{th} generation (5^{th} generation, 5G) communication system, an LTE and 5G hybrid architecture, a 6G communication system, or a new communication system that appears in future communication development. Alternatively, the communication system may be a machine to machine (machine to machine, M2M) network, a machine type communication (machine type communication, MTC) network, or another network. The communication system may alternatively be a passive internet of things network communication system.

For example, the communication method provided in embodiments of this application may be applied to a communication system including a reader/writer and a tag.

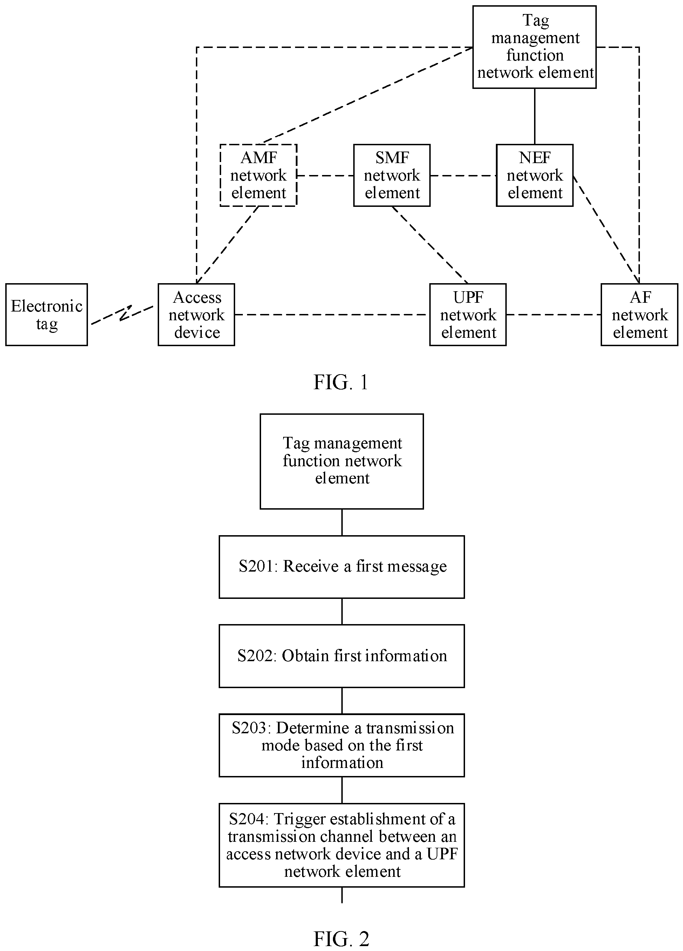

For example, FIG. 1 shows a network architecture to which embodiments of this application can be applicable. As shown in FIG. 1, the network architecture may include an electronic tag, an access network device, a tag management function network element, an AMF network element, an SMF network element, a UPF network element, an AF network element, an NEF network element, and the like.

The electronic tag may be referred to as a terminal, an access terminal, a subscriber unit, a subscriber station, a mobile station, a remote station, a remote terminal, a mobile device, a user terminal, a wireless communication device, a user agent, a user apparatus, or a target terminal. The terminal may be a passive internet of things terminal, or may be a tag. The terminal may be a passive device. The passive device may be a passive tag. The passive tag may collect energy by using a backscattering technology, to receive and send a packet. The passive tag includes but is not limited to a terminal tag without a power supply, for example, radio frequency identification (radio frequency identification, RFID), Bluetooth, or Zigbee. The terminal may alternatively be a semi-passive device or an active device. The active device may be a device having a wireless transceiver function, for example, a mobile phone (mobile phone), a tablet computer (tablet computer), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G mobile communication system, or a terminal in a future evolved network.

The wearable device may also be referred to as a wearable intelligent device, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some of functions without depending on smartphones, for example, smart watches or smart glasses, and include devices that are dedicated to only one type of application function and need to collaboratively work with other devices such as smartphones, for example, various smart bands or smart jewelry for monitoring physical signs.

In embodiments of this application, an apparatus configured to implement a function of the electronic tag may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the apparatus configured to implement the function of the electronic tag is the terminal device.

The access network device is configured to connect the terminal device to a wireless network. The access network device may be a base station (base station), an evolved NodeB (evolved NodeB, eNodeB) in an LTE system or an LTE-advanced (LTE-Advanced, LTE-A) system, a next generation NodeB (next generation NodeB, gNB) in a 5G communication system, a transmission reception point (transmission reception point, TRP), a baseband unit (baseband unit, BBU), a Wi-Fi access point (access point, AP), a base station in a future mobile communication system, an access node in a Wi-Fi system, or the like. The access network device may alternatively be a module or a unit that implements some functions of a base station, for example, may be a central unit (central unit, CU) or a distributed unit (distributed unit, DU). A specific technology and a specific device form that are used by the access network device are not limited in embodiments of this application. For example, in a network structure, the access network device may be a CU node, a DU node, or an access network device including the CU node and the DU node. Specifically, the CU node is configured to support protocols such as a radio resource control (radio resource control, RRC) protocol, a packet data convergence protocol (packet data convergence protocol, PDCP), and a service data adaptation protocol (service data adaptation protocol, SDAP). The DU node is configured to support a radio link control (radio link control, RLC) layer protocol, a medium access control (medium access control, MAC) layer protocol, and a physical layer protocol. The access network device may further include a read/write device such as a reader/writer and a reader, and an excitation device or an auxiliary device that can send only a downlink excitation signal or data to the electronic tag.

The tag management function network element is configured to manage the electronic tag.

The access and mobility management function network element is mainly used for attachment, mobility management, a tracking area update procedure, and the like of a terminal device in a mobile network. In the 5G communication system, the access and mobility management function network element may be referred to as an AMF. In a future communication system (for example, a 6G communication system), the access and mobility management function network element may alternatively be a network element with another name and that has the foregoing function. This is not limited in this application.

The session management function network element is mainly used for session management in the mobile network, for example, session establishment, modification, and release. A specific function is, for example, allocating an internet protocol (internet protocol, IP) address to the terminal, or selecting a user plane function network element that provides a packet forwarding function. In the 5G communication system, the session management function network element may be referred to as an SMF. In the future communication system, the session management function network element may alternatively be a network element with another name and that has the foregoing function. This is not limited in this application.

The user plane function network element is mainly configured to process a user packet, where the processing is, for example, forwarding, charging, or lawful interception. In the 5G communication system, the user plane function network element may be referred to as a UPF. In the future communication system, the user plane function network element may alternatively be a network element with another name and that has the foregoing function. This is not limited in this application.

The network exposure function network element may expose some functions of a network to an application in a controlled manner. In the 5G communication system, the network exposure function network element may be referred to as an NEF. In the future communication system, the network exposure function network element may alternatively be a network element with another name and that has the foregoing function. This is not limited in this application.

The application function network element may provide service data of various applications for a control plane network element in a communication network of an operator, or obtain data information and control information of the network from the control plane network element in the communication network. In the 5G communication system, the application function network element may be referred to as an AF. In the future communication system, the application function network element may alternatively be a network element with another name and that has the foregoing function. This is not limited in this application.

The network element described in the foregoing network architecture may be used as a service invocation network element (namely, an NF consumer), or may be used as a service provisioning network element (namely, an NF producer). For example, the AMF may be used as the service provisioning network element to provide a service for the SMF, or the AMF may be used as the service invocation network element to invoke a service provided by the SMF.

It may be understood that the foregoing network elements or functions may each be a network element in a hardware device, a software function running on a dedicated hardware, or a virtualized function instantiated on a platform (for example, a cloud platform). Optionally, the network elements or the functions may be implemented by one device, or may be jointly implemented by a plurality of devices, or may be one function module in one device. This is not specifically limited in embodiments of this application.

It should be understood that FIG. 1 is merely an example of an applicable network architecture, and an actually applied network architecture may include more or fewer network elements than those in FIG. 1. For example, the network architecture may not include the AMF network element. For example, the tag management function network element may implement a function of the AMF network element. For another example, the network architecture may not include the AMF network element or the SMF network element. For example, the tag management function network element may implement functions of the AMF network element and the SMF network element.

The communication method provided in embodiments of this application may be applied to the industry, the enterprise, the agriculture, the animal husbandry, the forestry, and the like. In an example for description, the method may be applied to product management in the industry. For example, management such as scanning and statistics collection may be automatically performed on a product by carrying a tag on the product. In another example for description, the method may be applied to industrial management on a device (for example, a forklift truck, a trailer, or an automated guided vehicle (automated guided vehicle, AGV)). For example, a life cycle, utilization, a location, and the like of the device may be managed by installing a tag on the device. In still another example for description, the method may be applied to management of a breeding product (such as a pig, a cattle, a sheep, or a chicken) in the animal husbandry. For example, management such as statistics collection on the breeding product may be implemented by fixing a tag on the breeding product. In still another example for description, the method may be applied to tree management in the forestry. For example, management such as statistics collection on a tree may be implemented by fixing a tag on the tree.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

The following describes the technical solutions in embodiments of this application with reference to the accompanying drawings in embodiments of this application.

FIG. 2 is a schematic flowchart of a communication method according to this application. The method includes the following steps.

S201: A tag management function network element receives a first message, where the first message is used to request to perform a first operation on information about an electronic tag.

For example, the first operation may include at least one of the following: a read operation, a write operation, an inventory operation, a kill operation, a lock operation, a block write operation, a block erase operation, an access operation, an encryption operation, or a decryption operation.

Optionally, the first message may carry at least one of the following: information about a first area, operation object information, or a first identifier. The information about the first area may be a cell identifier, a tracking area (tracking area, TA) list, or the like. The operation object information indicates the electronic tag on which the foregoing operation is performed. For example, the operation object information may be user group information, or may be application information. The first identifier is used to associate a subsequently reported operation result with the first message.

In a possible implementation, the first message may be from an AF network element, an NEF network element, an access network device, or an AMF network element.

For example, the first message is from the NEF network element. S201 may be implemented by using the following steps A1 and A2.

A1: The AF network element may send a message A to the NEF network element, where the message A may be used to request to perform the first operation on the information about the electronic tag.

Optionally, the message A may further carry at least one of the following: information about a second area, the operation object information, or the first identifier, where the information about the second area may be geographical area information, administrative region information, the cell identifier, the TA list, or the like.

A2: After receiving the message A, the NEF network element may send the first message to the tag management function network element.

Optionally, the first message may carry at least one of the following: the information about the first area, the operation object information, or the first identifier. The information about the first area may be determined by the NEF network element based on the information about the second area carried in the message A. For example, if the information about the second area is the geographic area information, the administrative region information, or the like, the NEF network element may determine the cell identifier or the TA list based on the information about the second area, to obtain the information about the first area.

Optionally, the tag management function network element may determine, based on the area information carried in the first message, the access network device, the AMF network element, and the like that correspond to the electronic tag.

S202: The tag management function network element obtains first information.

The first information may indicate a transmission mode expected by the application function network element. Specifically, the first information may indicate a specific path of a transmission path expected by the AF network element; the first information may indicate a type of a transmission path expected by the AF network element; the first information may indicate a network element that a transmission path expected by the AF network element passes through; or the first information indicates a parameter such as an expected load.

Alternatively, the first information may include information about at least one of the following devices: the access network device, an access and mobility management function network element, a session management function, or a user plane function network element, and information about a first device in the at least one device indicates a capability and/or a load of the first device. Alternatively, the first information may indicate an application scenario. Alternatively, the first information may be configuration information of the tag management function, and the configuration information is used to determine the transmission mode.

In an implementation, the first information may be from the application function network element.

In another implementation, the first information may be from local information of the tag management function network element. For example, the first information may be from the configuration information of the tag management function network element, or the first information may be from information obtained by the tag management function network element from another device.

S203: The tag management function network element determines the transmission mode based on the first information.

The transmission mode may be transmission via a user plane, or may be transmission via a control plane.

Specifically, the transmission mode of transmission via the user plane may include but is not limited to the following paths: a path 1: the access network device -> the UPF network element, where transmission between the access network device and the UPF network element is performed through a tunnel; a path 2: the access network device -> the UPF network element, where transmission between the access network device and the UPF network element is performed through an interface; and a path 3: the access network device -> the UPF network element, where transmission between the access network device and the UPF network element is performed by using an IP address.

The transmission mode of transmission via the control plane may include but is not limited to the following paths: a path 4: the access network device -> the tag management function network element; a path 5: the access network device -> the AMF network element -> the SMF network element -> the NEF network element; and a path 6: the access network device -> the AMF network element -> the SMF network element -> the UPF network element.

In a specific implementation, the tag management function network element may determine a specific transmission path based on the first information, or may determine the transmission mode based on the first information.

Optionally, in an implementation in which the first message is from the AF network element, before determining the transmission mode based on the first information, the tag management function network element may send third information to the application function network element, where the third information includes information about at least one transmission mode. In the implementation, the tag management function network element exposes the at least one transmission mode to the application function network element, so that the application function network element can select the expected transmission mode based on the at least one transmission mode.

S204: The tag management function network element triggers establishment of a transmission channel between the access network device and the UPF network element.

It should be understood that the tag management function network element may alternatively determine that the transmission mode is transmission via the control plane. In this case, S204 may not be performed.

In a specific implementation, S204 may be implemented in the following manner: sending a message B to the first device. Correspondingly, the first device receives the message B. For example, the first device may be the AMF network element. Alternatively, the first device may be the access network device. Alternatively, the first device may be the UPF network element or the like.

The message B indicates the access network device to perform the first operation on the information about the electronic tag.

In an implementation, if the transmission mode determined by the tag management function network element is transmission via the user plane, the message B may carry second information. The second information is used to trigger the establishment of the transmission channel between the access network device and the UPF network element. The transmission channel is used to transmit the result of the operation performed on the information about the electronic tag.

Specifically, the second information may be address information of the AF network element.

In a possible implementation, the message B may further carry at least one of the following: the information about the first area, the operation object information, or the first identifier. For the operation object information and the first identifier, refer to the foregoing descriptions. Details are not described herein again.

Optionally, after receiving the message B, the AMF may further send a message C to the access network device. The message C indicates the access network device to perform the first operation on the information about the electronic tag. The access network device performs the first operation on the electronic tag based on the message C.

After performing the first operation on the electronic tag, the access network device reports an execution result based on the transmission mode.

Optionally, the message C may carry information such as the information about the first area, the first identifier, and the operation object information.

In an implementation, the access network device may store information such as the information about the first area, the first identifier, and the operation object information in the received message C.

According to the solution provided in this embodiment of this application, the tag management function may flexibly select a transmission path. Compared with a conventional technology in which a transmission mode of transmission via a control plane is fixedly used, in this embodiment of this application, data transmission flexibility can be improved. According to the solution provided in this embodiment of this application, the user plane may be selected for transmission, so that signaling overheads can be reduced.

The following describes, with reference to the transmission mode selected by the tag management function, an example of a process of reporting the execution result of the electronic tag.

Example 1: The transmission mode is transmission via the control plane. An example in which the transmission path is the path 4 is used for description.

In the example, after performing the first operation on the electronic tag, the access network device may send the execution result to the tag management function. Optionally, the execution result may carry the first identifier.

Optionally, after receiving the execution result, the tag management function may report the execution result to the AF network element via the NEF network element.

It should be understood that the path 4 is used as an example for description in Example 1. To be specific, after the access network device obtains the execution result, the transmission path of the execution result is: the access network device -> the tag management function network element. It may be understood that if the transmission path is 5, after the access network device obtains the execution result, the transmission path of the execution result is: the access network device -> the AMF network element -> the SMF network element -> the NEF network element. If the transmission path is 6, after the access network device obtains the execution result, the transmission path of the execution result is: the access network device -> the AMF network element -> the SMF network element -> the UPF network element.

For ease of understanding of the solution, the following describes a data transmission procedure with reference to Example 1.

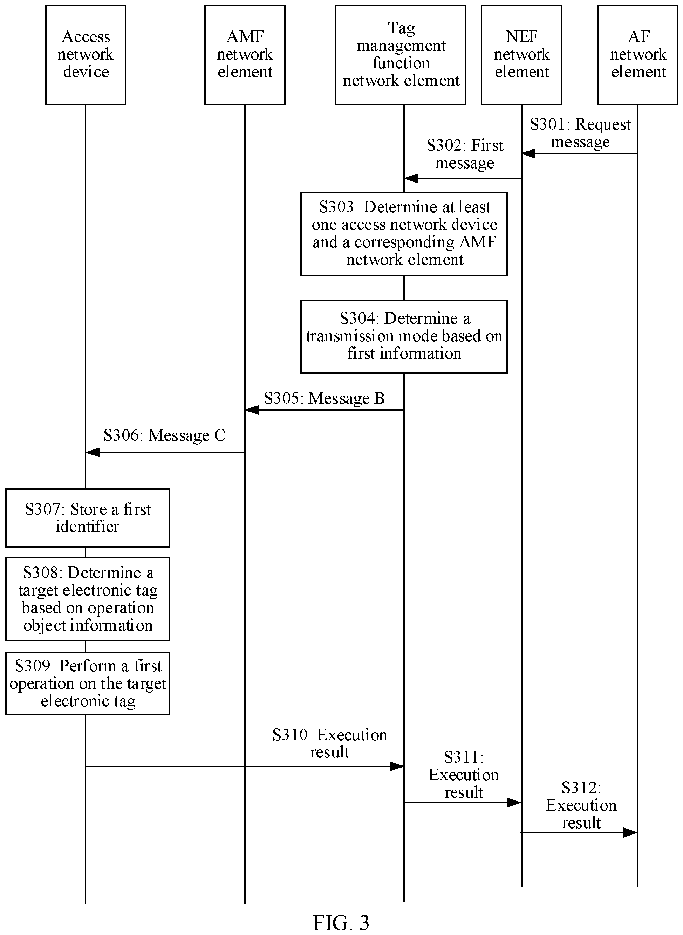

As shown in FIG. 3, the data transmission procedure may include the following steps.

S301: An AF network element sends a request message to an NEF network element.

The request message is used to request to perform a first operation on an electronic tag. For the first operation, refer to the foregoing related descriptions.

Optionally, the request message may further carry information about a second area, operation object information, and a first identifier. For the information about the second area, the operation object information, and the first identifier, refer to the foregoing related descriptions.

S302: The NEF network element sends a first message to a tag management function network element.

The first message is used to request to perform the first operation on the electronic tag.

The first message may carry at least one of the following: information about a first area, the operation object information, or the first identifier. For the information about the first area, refer to the foregoing related descriptions.

Optionally, if the information about the second area is geographic area information, administrative region information, or the like, the NEF network element may determine information such as a cell identifier or a TA list based on the information about the second area, to obtain the information about the first area.

S303: The tag management function network element determines at least one access network device and a corresponding AMF network element.

In an implementation, the tag management function network element may determine the at least one access network device and the corresponding AMF network element based on the information about the first area.

S304: The tag management function network element determines a transmission mode based on first information.

For a manner of obtaining the first information and related descriptions, refer to the foregoing descriptions of S202. For an implementation of S304, refer to the foregoing related descriptions of S203. Details are not described herein again.

It is assumed that the determined transmission mode is transmission via a control plane, and the foregoing path 4 is used as an example.

S305: The tag management function network element sends a message B to the AMF network element.

The message B indicates the access network device to perform the first operation on information about the electronic tag.

Optionally, the message B may further carry at least one of the following: the operation object information or the first identifier. For the operation object information and the first identifier, refer to the foregoing descriptions. Details are not described herein again.

S306: The AMF network element sends a message C to the access network device.

The message C indicates the access network device to perform the first operation on the information about the electronic tag.

Optionally, the message C may further carry at least one of the following information: the information about the first area, the first identifier, the operation object information, and the like. For the information about the first area, the first identifier, and the operation object information, refer to the foregoing descriptions. Details are not described herein again.

In an implementation, the message C may be the foregoing message B. In other words, the AMF network element forwards the message B to the access network device.

S307: The access network device stores the first identifier.

S308: The access network device determines a target electronic tag based on the operation object information.

S309: The access network device performs the first operation on the target electronic tag.

For example, the first operation is an inventory operation. The access network device may perform inventory on the target electronic tag, to obtain identification information of the target electronic tag.

S310: The access network device sends an execution result to the tag management function network element.

Optionally, the execution result may further carry the first identifier.

S311: The tag management function network element sends the execution result to the NEF network element.

Optionally, the tag management function network element may further store the execution result and information about the access network device.

S312: The NEF network element sends the execution result to the AF network element.

In FIG. 3, the path 4 is used as an example for description. If a transmission path is 5, S310 to S312 may be replaced with the following process: The access network device sends the execution result to the AMF network element; the AMF network element sends the execution result to an SMF network element; and the SMF network element sends the execution result to the NEF network element. Optionally, the NEF network element may send the execution result to the AF network element. If a transmission path is 6, S310 to S312 may be replaced with the following process: The access network device sends the execution result to the AMF network element; the AMF network element sends the execution result to an SMF network element; and the SMF network element sends the execution result to a UPF network element. Optionally, the UPF network element may send the execution result to the AF network element.

Example 2: The transmission mode is transmission via the user plane. An example in which the transmission path is the path 1 is used for description.

In the example, before the AMF network element sends the message C to the access network device, the AMF network element may trigger the access network device to establish a transmission tunnel to the UPF network element.

After the AMF network element sends the message C to the access network device, the access network device may perform the first operation on the electronic tag, and send the execution result to the UPF network element through the transmission tunnel between the access network device and the UPF network element.

Optionally, after receiving the execution result, the UPF network element may report the execution result to the AF network element based on the address information of the AF network element. In an implementation, the AMF network element may include the address information of the AF network element in a tunnel establishment message, and send the tunnel establishment message to the UPF network element.

In a possible implementation, the AMF network element may trigger, by using the following A1 to A5, the access network device to establish the transmission tunnel to the UPF network element.

A1: The AMF network element may send a tunnel establishment request to the SMF network element.

The tunnel establishment request may carry information about the access network device and information about the UPF network element. Optionally, the tunnel establishment request may further carry the address information of the AF network element and the first identifier.

A2: The SMF network element sends the tunnel establishment message to the UPF network element.

Optionally, the UPF network element may store an association relationship between the first identifier, the address information of the AF network element, and an identifier of the established tunnel.

A3: Establish the tunnel between the access network device and the UPF network element.

A4: The UPF network element sends a tunnel establishment success message to the SMF network element.

A5: The SMF network element sends the tunnel establishment success message to the AMF network element.

For ease of understanding of the solution, the following describes a data transmission procedure with reference to Example 2.

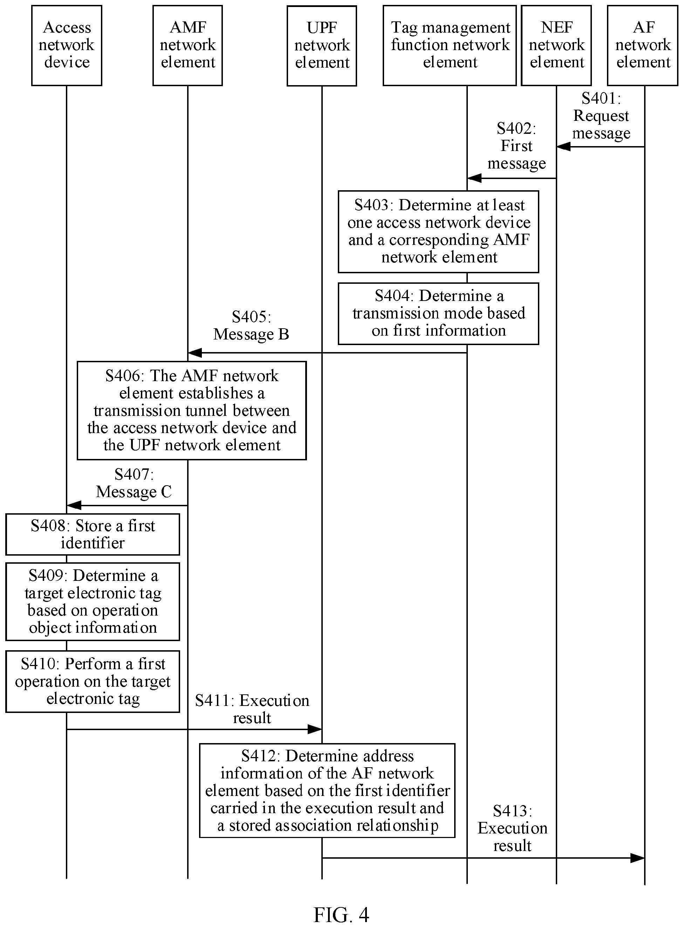

As shown in FIG. 4, the data transmission procedure may include the following steps.

For S401 to S404, refer to the foregoing S301 to S304. Details are not described herein again.

It is assumed that a determined transmission mode is transmission via a user plane, and the foregoing path 1 is used as an example.

S405: A tag management function network element sends a message B to an AMF network element.

The message B indicates an access network device to perform a first operation on information about an electronic tag. The message B may carry address information of an AF network element.

Optionally, the message B may further carry at least one of the following: operation object information or a first identifier. For the operation object information and the first identifier, refer to the foregoing descriptions. Details are not described herein again.

S406: The AMF network element establishes a transmission tunnel between the access network device and a UPF network element.

For a specific implementation, refer to the foregoing A1 to A5. Details are not described herein again.

S407: The AMF network element sends a message C to the access network device.

The message C indicates the access network device to perform the first operation on the information about the electronic tag.

Optionally, the message C may further carry at least one of the following information: information about a first area, the first identifier, the operation object information, and the like. For the information about the first area, the first identifier, and the operation object information, refer to the foregoing descriptions. Details are not described herein again.

In an implementation, the message C may be the foregoing message B. In other words, the AMF network element forwards the message B to the access network device.

Optionally, after receiving an inventory request, the access network device may determine a local air interface resource corresponding to the transmission tunnel.

For S408 to S410, refer to the foregoing S307 to S309. Details are not described herein again.

S411: The access network device sends an execution result to the UPF network element through the transmission tunnel.

Optionally, the execution result may further carry the first identifier.

S412: The UPF network element determines the address information of the AF network element based on the first identifier carried in the execution result and a stored association relationship.

S413: The UPF network element sends the execution result to the AF network element based on the address information.

Optionally, the AF network element may further send an operation end indication to the AMF network element.

Example 3: The transmission mode is transmission via the user plane. An example in which the transmission path is the path 2 is used for description.

In the example, after receiving the message C, the access network device triggers invoking the interface between the access network device and the UPF network element, and may perform the first operation on the electronic tag. Then, the access network device may send the execution result to the UPF network element through the interface between the access network device and the UPF network element.

Optionally, after receiving the execution result, the UPF network element may report the execution result to the AF network element based on an address of the AF network element. In an implementation, the AMF network element may send the address information of the AF network element to the access network device by using the message C, and then the access network device includes the address information of the AF network element in the execution result, so that the UPF network element can obtain the address information of the AF network element after receiving the execution result.

For ease of understanding of the solution, the following describes a data transmission procedure with reference to Example 3.

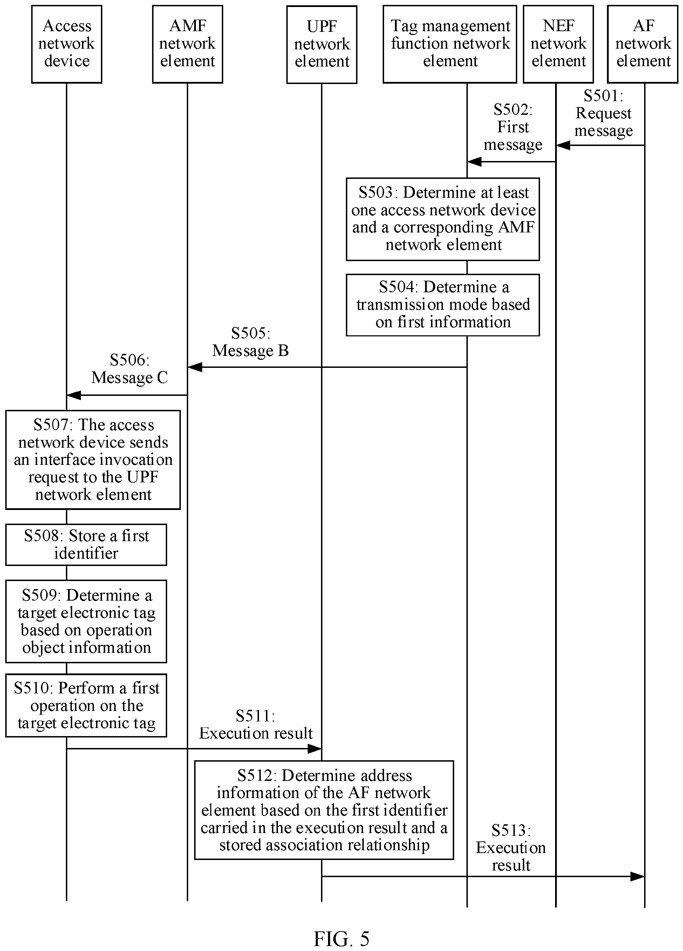

As shown in FIG. 5, the data transmission procedure may include the following steps.

For S501 to S504, refer to the foregoing S301 to S304. Details are not described herein again.

It is assumed that a determined transmission mode is transmission via a user plane, and the foregoing path 2 is used as an example.

S505: A tag management function network element sends a message B to an AMF network element.

The message B indicates an access network device to perform a first operation on information about an electronic tag. The message B may carry address information of an AF network element.

Optionally, the message B may further carry at least one of the following: operation object information or a first identifier. For the operation object information and the first identifier, refer to the foregoing descriptions. Details are not described herein again.

S506: The AMF network element sends a message C to the access network device.

The message C indicates the access network device to perform the first operation on the information about the electronic tag. The message C may carry the address information of the AF network element.

Optionally, the message C may further carry at least one of the following information: information about a first area, the first identifier, the operation object information, and the like. For the information about the first area, the first identifier, and the operation object information, refer to the foregoing descriptions. Details are not described herein again.

In an implementation, the message C may be the foregoing message B. In other words, the AMF network element forwards the message B to the access network device.

S507: The access network device sends an interface invocation request to a UPF network element.

The interface invocation request may carry the first identifier, an IP address of the access network device, and an IP address of the UPF network element.

For S508 to S510, refer to the foregoing S307 to S309. Details are not described herein again.

S511: The access network device sends an execution result to the UPF network element through an interface.

Optionally, the execution result may further carry the first identifier and the address information of the AF network element.

S512: The UPF network element determines the address information of the AF network element based on the first identifier carried in the execution result and a stored association relationship.

S513: The UPF network element sends the execution result to the AF network element based on the address information of the AF network element.

In an implementation, the UPF network element may change a target address of the execution result to the address information of the AF network element, and send the execution result.

Optionally, the AF network element may further send an operation end indication to the AMF network element.

It should be noted that the foregoing Example 1, Example 2, and Example 3 may be separately implemented without depending on the method described in FIG. 2.

It should be understood that, during specific implementation, a function of the AMF network element may be integrated into the tag management function network element. The actions of the AMF network element in the foregoing Example 1 to Example 3 may be implemented by the tag management function network element, and an interaction behavior between the AMF network element and the tag management function network element may not be performed. Similarly, the actions of the SMF network element in the foregoing Example 1 to Example 3 may be implemented by the tag management function network element, an interaction behavior between the SMF network element and the tag management function network element may not be performed, and the like.

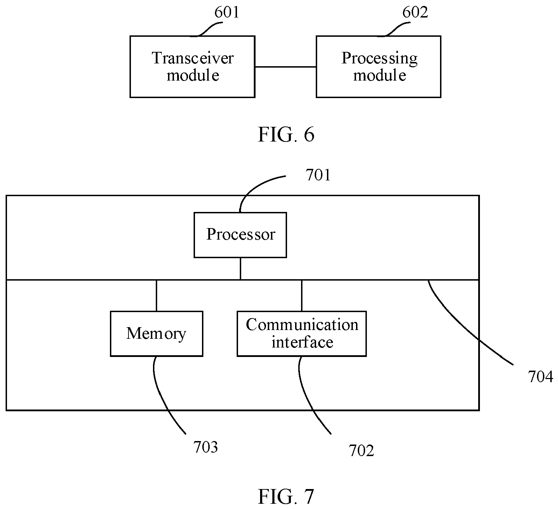

Based on a same technical concept, an embodiment of this application further provides a communication apparatus, configured to implement the method embodiments. FIG. 6 is a diagram of a communication apparatus according to an embodiment of this application. The communication apparatus includes a transceiver module 601 and a processing module 602. The transceiver module 601 is configured to perform information receiving and sending processing. The processing module 602 is configured to implement data processing by the communication apparatus. It should be understood that, in this embodiment of this application, the processing module 602 may be implemented by a processor or a processor-related circuit component (or referred to as a processing circuit). The transceiver module 601 may be implemented by a transceiver or a transceiver-related circuit component.

For example, the communication apparatus may be a communication apparatus device, or may be a chip used in the communication apparatus device, or another combined device or component that has a function of the communication apparatus device.

When the communication apparatus device is a tag management function network element, the transceiver module 601 may be configured to receive a first message, where the first message is used to request to perform an operation on information about an electronic tag. The processing module 602 is configured to: obtain first information; determine a transmission mode based on the first information, where the transmission mode is transmission via a user plane; and trigger establishment of a transmission channel between an access network device and a user plane function network element, where the transmission channel is used for transmission of a result of the operation on the information about the electronic tag.

In addition, the foregoing modules may be further configured to support another process performed by the tag management function network element in embodiments shown in FIG. 2 to FIG. 5. For beneficial effects, refer to the foregoing descriptions. Details are not described herein again.

When the communication apparatus device is a first device such as an AMF network element, the transceiver module 601 is configured to receive second information from a tag management function network element, where the second information is used to trigger the access and mobility management function network element to establish a transmission channel between an access network device and a user plane function network element, the transmission channel is used to transmit a result of an operation performed on information about an electronic tag, and the second information carries an address of an application function network element. The processing module 602 is configured to establish the transmission channel between the access network device and the user plane function network element.

In addition, the foregoing modules may be further configured to support another process performed by the access and mobility management function network element in embodiments shown in FIG. 2 to FIG. 5. For beneficial effects, refer to the foregoing descriptions. Details are not described herein again.

When the communication apparatus device is an access network device, the transceiver module 601 is configured to receive a second message, where the second message indicates to perform a first operation on information about a first-type electronic tag in a first area. The processing module 602 is configured to: determine at least one electronic tag based on the second message; and perform the first operation on the at least one electronic tag. The transceiver module 601 is further configured to send an execution result of the first operation to a user plane function network element.

In addition, the foregoing modules may be further configured to support another process performed by the access network device in embodiments shown in FIG. 2 to FIG. 5. For beneficial effects, refer to the foregoing descriptions. Details are not described herein again.

When the communication apparatus device is a user plane function network element, the transceiver module 601 is configured to receive fifth information from an access network device, where the fifth information is a result of a first operation performed by the access network device on information about at least one electronic tag. The processing module 602 is configured to obtain an address of an application function network element. The transceiver module 601 is further configured to send the fifth information to the application function network element.

In addition, the foregoing modules may be further configured to support another process performed by the user plane function network element in embodiments shown in FIG. 2 to FIG. 5. For beneficial effects, refer to the foregoing descriptions. Details are not described herein again.

Based on a same technical concept, an embodiment of this application further provides a communication device, configured to implement the method embodiments. FIG. 7 is a diagram of another communication apparatus according to an embodiment of this application. The communication apparatus includes a processor 701 and a communication interface 702, and may further include a memory 703 and a communication bus 704. The processor 701, the communication interface 702, and the memory 703 may be connected to each other through the communication bus 704. The communication bus 704 may be a peripheral component interconnect (peripheral component interconnect, PCI) bus, an extended industry standard architecture (extended industry standard architecture, EISA) bus, or the like. The communication bus 704 may be classified into an address bus, a data bus, a control bus, and the like. For ease of representation, only one line is used for representation in FIG. 7, but this does not mean that there is only one bus or only one type of bus. The processor 701 may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), generic array logic (Generic Array Logic, GAL), or any combination thereof. The memory 703 may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache.

Specifically, the processor 701 may be configured to implement a function of the processing module 602. The communication interface 702 may be configured to implement a function of the transceiver module 601. For details, refer to the foregoing descriptions. Details are not described herein again.

An embodiment of this application provides a computer-readable storage medium storing a computer program. The computer program includes instructions for performing the foregoing method embodiments.

An embodiment of this application provides a computer program product including instructions. When the computer program product runs on a computer, the foregoing method embodiments are enabled to be performed.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of processes and/or blocks in the flowcharts and/or the block diagrams. These computer program instructions may be provided for a general-purpose computer, a dedicated computer, an embedded processor, or a processor of another programmable data processing device to generate a machine, so that the instructions executed by a computer or the processor of the another programmable data processing device generate an apparatus for implementing a specific function in one or more processes in the flowcharts and/or one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or one or more blocks in the block diagrams.

These computer program instructions may alternatively be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or one or more blocks in the block diagrams.

Although embodiments of this application have been described, a person skilled in the art can make other changes and modifications to these embodiments once the basic inventive concept is learned. Therefore, the following claims are intended to be construed as to cover the preferred embodiments and all changes and modifications falling within the scope of this application.

It is clear that a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

## Claims

1. A data transmission method, wherein the method is applied to a tag management function network element, and the method comprises:
receiving a first message, wherein the first message is used to request to perform an operation on information about an electronic tag;
obtaining first information;
determining a transmission mode based on the first information, wherein the transmission mode is transmission via a user plane; and
triggering establishment of a transmission channel between an access network device and a user plane function network element, wherein the transmission channel is used for transmission of a result of the operation on the information about the electronic tag.

2. The method according to claim 1, wherein the transmission mode is specifically:
transmission through a tunnel between the access network device and the user plane function network element, transmission through an interface between the access network device and the user plane function network element, or forwarding by using an internet protocol IP address of the user plane function network element.

3. The method according to claim 1 or 2, wherein second information carries address information of an application function network element.

4. The method according to any one of claims 1 to 3, wherein the first information is from the application function network element, or the first information is from local information of the tag management function network element.

5. The method according to claim 4, wherein the first information is from the application function network element; and
before the determining a transmission mode based on the first information, the method further comprises:
sending third information to the application function network element, wherein the third information comprises information about at least one transmission mode.

6. The method according to any one of claims 1 to 5, wherein
the first information indicates the transmission mode expected by the application function network element;
the first information comprises information about at least one of the following devices: the access network device, an access and mobility management function network element, a session management function, or the user plane function network element, and information about a first device in the at least one device indicates a capability and/or a load of the first device;
the first information indicates an application scenario; or
the first information is configuration information of the tag management function network element, and the configuration information is used to determine the transmission mode.

7. The method according to any one of claims 1 to 6, wherein the operation comprises at least one of the following: a read operation, a write operation, an inventory operation, a kill operation, a lock operation, a block write operation, a block erase operation, an access operation, an encryption operation, or a decryption operation.

8. The method according to any one of claims 1 to 7, wherein the triggering establishment of a transmission channel between an access network device and a user plane function network element comprises:
sending the second information to the first device, wherein the second information is used to trigger the establishment of the transmission channel between the access network device and the user plane function network element, and the first device is the access network device, the access and mobility management function network element, or the user plane function network element.

9. A data transmission method, wherein the method is applied to a first network element, and the method comprises:
receiving second information from a tag management function network element, wherein the second information is used to trigger establishment of a transmission channel between an access network device and a user plane function network element, the transmission channel is used to transmit a result of an operation performed on information about an electronic tag, and the second information carries an address of an application function network element; and
establishing the transmission channel between the access network device and the user plane function network element.

10. The method according to claim 9, wherein the transmission channel between the access network device and the user plane function network element is transmission through a tunnel, transmission through an interface, or forwarding by using an internet protocol IP address.

11. The method according to claim 9, wherein if the transmission channel between the access network device and the user plane function network element is transmission through the interface, the establishing the transmission channel between the access network device and the user plane function network element comprises:
sending fourth information to the access network device, wherein the fourth information is used to trigger invoking the interface from the access network device to the user plane function network element.

12. The method according to any one of claims 9 to 11, wherein a first device is the access network device, an access and mobility management function network element, or the user plane function network element.

13. A data transmission method, wherein the method is applied to an access network device, and the method comprises:
receiving a second message, wherein the second message indicates to perform a first operation on information about a first-type electronic tag in a first area;
determining at least one electronic tag based on the second message;
performing the first operation on the at least one electronic tag; and
sending an execution result of the first operation to a user plane function network element.

14. The method according to claim 13, wherein the sending an execution result of the first operation to a user plane function network element comprises:
sending the execution result of the first operation to the user plane function network element through a tunnel between the access network device and the user plane function network element;
sending the execution result of the first operation to the user plane function network element based on an interface between the access network device and the user plane function network element; or
forwarding the execution result of the first operation to the user plane function network element based on an internet protocol IP address of the user plane function network element.

15. The method according to claim 13 or 14, wherein the first operation comprises at least one of the following: a read operation, a write operation, an inventory operation, a kill operation, a lock operation, a block write operation, a block erase operation, an access operation, an encryption operation, or a decryption operation.

16. The method according to any one of claims 13 to 15, wherein the method further comprises:
obtaining an address of an application function network element.

17. A data transmission method, wherein the method is applied to a user plane function network element, and the method comprises:
receiving fifth information from an access network device, wherein the fifth information is a result of a first operation performed by the access network device on information about at least one electronic tag;
obtaining an address of an application function network element; and
sending the fifth information to the application function network element.

18. The method according to claim 17, wherein the receiving fifth information from an access network device comprises:
receiving the fifth information through a tunnel between the access network device and the user plane function network element; or
receiving the fifth information based on an interface between the access network device and the user plane function network element.

19. The method according to claim 17 or 18, wherein the obtaining an address of an application function network element comprises:
obtaining the address of the application function network element from the access network device, an access and mobility management function network element, or a session management function network element.

20. The method according to any one of claims 17 to 19, wherein the first operation comprises at least one of the following: a read operation, a write operation, an inventory operation, a kill operation, a lock operation, a block write operation, a block erase operation, an access operation, an encryption operation, or a decryption operation.

21. A data transmission apparatus, wherein the apparatus is used in a tag management function network element, and the apparatus comprises:
a transceiver module, configured to receive a first message, wherein the first message is used to request to perform an operation on information about an electronic tag; and
a processing module, configured to obtain first information; and
determine a transmission mode based on the first information, wherein the transmission mode is transmission via a user plane, wherein
the transceiver module is further configured to trigger establishment of a transmission channel between an access network device and a user plane function network element, wherein the transmission channel is used for transmission of a result of the operation on the information about the electronic tag.

22. The apparatus according to claim 21, wherein the transmission mode is specifically: transmission through a tunnel between the access network device and the user plane function network element, transmission through an interface between the access network device and the user plane function network element, or forwarding by using an internet protocol IP address of the user plane function network element.

23. The apparatus according to claim 21 or 22, wherein second information carries address information of an application function network element.

24. The apparatus according to any one of claims 21 to 23, wherein the first information is from the application function network element, or the first information is from local information of the tag management function network element.

25. The apparatus according to claim 24, wherein the first information is from the application function network element; and
the transceiver module is further configured to:
send third information to the application function network element before the processing module determines the transmission mode based on the first information, wherein the third information comprises information about at least one transmission mode.

26. The apparatus according to any one of claims 21 to 25, wherein
the first information indicates the transmission mode expected by the application function network element;
the first information comprises information about at least one of the following devices: the access network device, an access and mobility management function network element, a session management function, or the user plane function network element, and information about a first device in the at least one device indicates a capability and/or a load of the first device;
the first information indicates an application scenario; or
the first information is configuration information of the tag management function network element, and the configuration information is used to determine the transmission mode.

27. The apparatus according to any one of claims 21 to 26, wherein the operation comprises at least one of the following: a read operation, a write operation, an inventory operation, a kill operation, a lock operation, a block write operation, a block erase operation, an access operation, an encryption operation, or a decryption operation.

28. The apparatus according to any one of claims 21 to 27, wherein when the establishment of the transmission channel between the access network device and the user plane function network element is triggered, the processing module is specifically configured to:
send the second information to the first device by using the transceiver module, wherein the second information is used to trigger the establishment of the transmission channel between the access network device and the user plane function network element, and the first device is the access network device, the access and mobility management function network element, or the user plane function network element.

29. A data transmission apparatus, wherein the apparatus is used in a first device, and the apparatus comprises:
a transceiver module, configured to receive second information from a tag management function network element, wherein the second information is used to trigger establishment of a transmission channel between an access network device and a user plane function network element, the transmission channel is used to transmit a result of an operation performed on information about an electronic tag, and the second information carries an address of an application function network element; and
a processing module, configured to establish the transmission channel between the access network device and the user plane function network element.

30. The apparatus according to claim 29, wherein the transmission channel between the access network device and the user plane function network element is transmission through a tunnel, transmission through an interface, or forwarding by using an internet protocol IP address.

31. The apparatus according to claim 30, wherein if the transmission channel between the access network device and the user plane function network element is transmission through the interface, when establishing the transmission channel between the access network device and the user plane function network element, the processing module is specifically configured to:
send fourth information to the access network device by using the transceiver module, wherein the fourth information is used to trigger invoking the interface from the access network device to the user plane function network element.

32. The apparatus according to any one of claims 29 to 31, wherein the first device is the access network device, an access and mobility management function network element, or the user plane function network element.

33. A data transmission apparatus, wherein the apparatus is used in an access network device, and the apparatus comprises:
a transceiver module, configured to receive a second message, wherein the second message indicates to perform a first operation on information about a first-type electronic tag in a first area; and
a processing module, configured to: determine at least one electronic tag based on the second message; and
perform the first operation on the at least one electronic tag, wherein
the transceiver module is further configured to send an execution result of the first operation to a user plane function network element.

34. The apparatus according to claim 33, wherein when sending the execution result of the first operation to the user plane function network element, the transceiver module is specifically configured to:
send the execution result of the first operation to the user plane function network element through a tunnel between the access network device and the user plane function network element;
send the execution result of the first operation to the user plane function network element based on an interface between the access network device and the user plane function network element; or
forward the execution result of the first operation to the user plane function network element based on an internet protocol IP address of the user plane function network element.

35. The apparatus according to claim 33 or 34, wherein the first operation comprises at least one of the following: a read operation, a write operation, an inventory operation, a kill operation, a lock operation, a block write operation, a block erase operation, an access operation, an encryption operation, or a decryption operation.

36. The apparatus according to any one of claims 33 to 35, wherein the processing module is further configured to:
obtain an address of an application function network element.

37. A data transmission apparatus, wherein the apparatus is used in a user plane function network element, and the apparatus comprises:
a transceiver module, configured to receive fifth information from an access network device, wherein the fifth information is a result of a first operation performed by the access network device on information about at least one electronic tag; and
a processing module, configured to obtain an address of an application function network element, wherein
the transceiver module is further configured to send the fifth information to the application function network element.

38. The apparatus according to claim 37, wherein when receiving the fifth information from the access network device, the transceiver module is specifically configured to:
receive the fifth information through a tunnel between the access network device and the user plane function network element; or
receive the fifth information based on an interface between the access network device and the user plane function network element.

39. The apparatus according to claim 37 or 38, wherein when obtaining the address of the application function network element, the processing module is specifically configured to:
obtain the address of the application function network element from the access network device, an access and mobility management function network element, or a session management function network element.

40. The apparatus according to any one of claims 37 to 39, wherein the first operation comprises at least one of the following: a read operation, a write operation, an inventory operation, a kill operation, a lock operation, a block write operation, a block erase operation, an access operation, an encryption operation, or a decryption operation.

41. A communication device, comprising: a processor, and a memory and a communication interface that are separately coupled to the processor, wherein the communication interface is configured to communicate with another device, and the processor is configured to: run instructions or a program in the memory, and perform the method according to any one of claims 1 to 8 through the communication interface, perform the method according to any one of claims 9 to 12 through the communication interface, perform the method according to any one of claims 13 to 16 through the communication interface, or perform the method according to any one of claims 17 to 20 through the communication interface.

42. A computer-readable storage medium, wherein the computer-readable storage medium stores instructions, and when the instructions are run on a computer, the computer is enabled to perform the method according to any one of claims 1 to 20.

43. A computer program product comprising instructions, wherein when the instructions are run on a computer, the computer is enabled to perform the method according to any one of claims 1 to 20.

44. A system, comprising a tag management function network element, an access network device, and a user plane function network element, wherein the tag management function network element is configured to perform the method according to any one of claims 1 to 8, the access network device is configured to perform the method according to any one of claims 13 to 16, and the user plane function network element is configured to perform the method according to any one of claims 17 to 20.

45. The system according to claim 44, wherein the system further comprises a first network element, and the first network element is configured to perform the method according to any one of claims 9 to 12.
